Europäisches Patentamt

European Patent Office

Office européen des brevets

(19)

(11) Numéro de publication : **0 263 157 B1**

(12) # FASCICULE DE BREVET EUROPEEN

(45) Date de publication du fascicule du brevet :
**11.03.92 Bulletin 92/11**

(51) Int. Cl.$^5$: **G06F 13/40, H04M 9/02**

(21) Numéro de dépôt : **87902552.6**

(22) Date de dépôt : **22.04.87**

(86) Numéro de dépôt international :
**PCT/FR87/00132**

(87) Numéro de publication internationale :
**WO 87/06740 05.11.87 Gazette 87/24**

---

(54) **PROCEDE ET DISPOSITIF POUR LE TRANSFERT DE SIGNAUX ENTRE DES MODULES D'UN ENSEMBLE ELECTRONIQUE.**

---

(30) Priorité : **22.04.86 FR 8605759**

(43) Date de publication de la demande :
**13.04.88 Bulletin 88/15**

(45) Mention de la délivrance du brevet :
**11.03.92 Bulletin 92/11**

(84) Etats contractants désignés :
**BE CH DE FR GB IT LI NL SE**

(56) Documents cités :
**US-A- 4 292 475**
**Patent Abstracts of Japan, volume 7, No. 146**
**(P-206)(1291) 25 June 1983, see abstract**

(56) Documents cités :
**Patent Abstracts of Japan, volume 10, No. 87**
**(E-393)(2144), 5 April 1986, see abstract**
**Elektrotechnik, 63, H. 17, 11. September 1981,**
**pages 30 à33, "Rationalisiert die Messwerter-**
**fassung", Ing. Werner Soemer**

(73) Titulaire : **COMTECH société anonyme**
**Route de Lourmarin**
**F-84160 Cadenet (FR)**

(72) Inventeur : **COMTECH société anonyme**
**Route de Lourmarin**
**F-84160 Cadenet (FR)**

(74) Mandataire : **Sauvage, Renée**
**Cabinet Sauvage 100 bis, avenue de**
**Saint-Mandé**
**F-75012 Paris (FR)**

---

Jouve, 18, rue Saint-Denis, 75001 PARIS

**Description**

L'invention est du domaine de l'appareillage électronique et concerne les ensembles électroniques composés de plusieurs parties qui sont électriquement connectées au moyen de prises à contacts multiples.

Quand on réalise un ensemble électrique comme par exemple un appareil ou un système, on est souvent amené pour des raisons pratiques à le diviser mécaniquement en plusieurs éléments souvent appelés modules que l'on connecte électriquememt à l'aide de prises à contacts multiples. Ainsi par exemple réalise-t-on le plus souvent les appareils en répartissant leurs circuits sur plusieurs supports plans appelés "cartes" qui se connectent au moyen de prises multicontacts appelées "connecteurs", ou réalise-t-on des systèmes en distribuant les diverses fonctions entre plusieurs appareils que l'on relie par des câbles munis de fiches multibroches.

Il est pratiquement toujours nécessaire, quand un ensemble électronique se trouve ainsi divisé en modules, d'opérer entre ceux-ci le transfert de signaux pour assurer le fonctionnement d'ensemble. Pour certaines catégories d'ensembles, les signaux à transférer entre modules se présentent sous forme de messages numériques de durée définie et assez courte, et un moyen bien approprié pour assurer leur transfert est la technique appelée "multiplex" selon laquelle les messages sont émis l'un après l'autre sur un groupe commun de conducteurs dit "bus" auquel chaque module est connecté en permanence.

Dans bien d'autres cas, par contre, la technique multiplex ne convient pas pour le transfert de signaux entre modules parce que, par exemple, les signaux doivent être transmis de façon continue ou quasi-continue comme généralement les signaux audio ou vidéo et la plupart des signaux dits analogiques, ou parce que la transmission d'un signal ne peut tolérer le délai que le multiplex est susceptible d'introduire quand le bus est occupé par une transmission en cours. Il faut alors établir une liaison distincte pour chaque signal, et on réalise ces liaisons par un câblage approprié, spécifique de l'appareil ou du système, établi selon le cas soit entre les embases (c'est-à-dire les parties fixes) des prises servant à connecter les modules, soit au moyen des câbles reliant entre eux les modules.

En pratique, la nécessité d'un tel câblage, souvent appelé "câblage de fond de panier" pour les appareils, est source d'inconvénients. Lors de l'étude il est souvent compliqué à définir. Il est ensuite coûteux à réaliser du fait qu'il est spécifique de l'appareil ou du système et, au cours de la mise au point, il risque de devoir être modifié. Il doit être repris si, pour s'adapter à de nouvelles conditions d'emploi par exemple, il s'avère nécessaire de modifier les interconnexions entre modules et il n'autorise pas, au contraire du multiplex, qu'en cours d'utilisation les liaisons s'adaptent aux nécessités du moment : par exemple qu'un circuit récepteur reçoive successivement des signaux provenant de divers modules. Il impose une embase déterminée pour l'enfichage de chaque module, ce qui conduit en pratique à munir les fiches de dispositifs dits "détrompeurs" pour interdire les erreurs de branchement et, dans le cas d'un système composé de beaucoup d'appareils, on doit relier ces appareils entre eux par de nombreux câbles, onéreux, encombrants et difficiles à repérer quand on doit modifier l'installation.

On connaît, d'après les documents "Electrotechnik, 63, H.17, 11 September 1981, pages 30 à 33" et US-A- 4 292 475, des procédés et dispositifs d'interconnexion, mais il n'y est pas prévu ou suggéré d'établir des connexions reconfigurables entre différents modules, sous la commande de ces modules eux-mêmes.

L'invention a pour but d'éviter ces inconvénients. Un premier objet de l'invention est un procédé pour le transfert de signaux, notamment analogiques, entre des points de connexion répartis entre des modules d'un ensemble électronique, chaque signal devant être transmis de façon au moins quasi-continue entre un point de connexion émetteur et au moins un point de connexion récepteur, chaque module ayant au moins un point de connexion émetteur ou récepteur, l'ensemble électronique comportant une double ligne de transfert permanente commune à l'ensemble des modules, formée par un groupe de conducteurs physiques et comportant, d'une part, une ligne de liaison utilisée pour la diffusion de messages nunmériques entre modules et, d'autre part, une ligne de connexion, un code d'identification numérique étant attribué à chaque point de connexion ; ledit procédé étant caractérisé par le fait que la ligne de liaison comportant au moins un conducteur de liaison auquel tous les modules sont reliés en permanence, que la ligne de connexion comporte plusieurs conducteurs de connexion, chaque conducteur de connexion étant susceptible d'être relié sélectivement à chaque point de connexion, un code d'identification numérique étant attribué à chaque conducteur de connexion, ledit procédé consistant :

– à faire directement diffuser par au moins un processeur d'un des modules, à l'ensemble des modules et au moyen de la ligne de liaison, des directives de reconfiguration d'interconnexion, indiquant, au moyen desdits codes d'identification numériques, au moins un conducteur de connexion et un ou des points de connexion devant y être connectés ou déconnectés ;

– en ce que tout processeur de module réagit à toute consigne de connexion ou de déconnexion détectée dans une directive et qui se rapporte à un des points de connexion de son module pour établir ces connexions ou déconnexions, et

– à réaliser ensuite via le ou les conducteurs indiqués le transfert de signaux entre les points de connexion reliés par la nouvelle reconfiguration d'interconnexion ainsi établie.

Selon une autre caractéristique de l'invention, chaque module enregistre en mémoire l'état de chaque conducteur de connexion.

Selon une autre caractéristique de l'invention, des directives de reconfiguration d'interconnexion sont des directives de libération indiquant un conducteur de connexion dont tout point de connexion y étant connecté doit s'en déconnecter.

Un autre objet de l'invention est un appareillage électronique pour le transfert simultané de signaux, notamment analogiques entre des points de connexion répartis entre des modules d'un ensemble électronique, chaque signal devant être transmis de façon au moins quasi-continue entre un point de connexion émetteur et au moins un point de connexion récepteur, chaque module ayant au moins un point de connexion caractérisé en ce que:

des contacts homologues des embases des prises à contacts multiples connectant les modules sont reliés entre eux par des conducteurs de ligne dont au moins un, dit conducteur de liaison, constitue une ligne de liaison et au moins deux des autres dits conducteurs de connexion constituent une ligne de connexion,

chaque module comporte, en plus de la fiche de la prise à contacts multiples et du module proprement dit, un dispositif de transfert comportant un processeur, par exemple un microprocesseur, relié à chaque contact de la fiche correspondant à un conducteur de liaison et une matrice de connexion à laquelle le processeur transmet des signaux de commande, la matrice est reliée, d'une part, aux contacts de la fiche correspondant aux conducteurs de connexion et, d'autre part, aux points de connexion reliés au module proprement dit,

pour chaque point de connexion, la matrice de connexion comporte un circuit sélecteur commandé à partir des signaux de commande transmis par le processeur, qui permet de relier le point de connexion à l'un quelconque des conducteurs de connexion via le contact correspondant de la fiche du module,

au moins un des processeurs émet sur la ligne de liaison des messages numériques diffusant à l'ensemble des processeurs des directives de reconfiguration d'interconnexion, au moyen de codes d'identification numérique attribués à chaque point de connexion et à chaque conducteur de connexion, directives reçues et analysées par chaque processeur, et tout processeur qui détecte, par l'analyse d'une directive, une consigne de connexion ou de déconnexion relative à un point de connexion de la matrice de connexion de son module, transmet à cette matrice le signal de commande approprié pour établir ces connexions et déconnexions.

Selon une autre caractéristique de l'invention, les circuits sélecteurs des matrices de connexion sont équipés d'un jeu de commutateurs électroniques comportant pour chaque conducteur de connexion un commutateur permettant de connecter sélectivement le conducteur au point de connexion.

Selon encore une autre caractéristique de l'invention, le dispositif de transfert des modules comporte une mémoire d'état d'interconnexion dans laquelle le processeur du module peut écrire ou qu'il peut relire et cette mémoire contient des registres indiquant l'état de chaque conducteur de connexion.

Selon encore une autre caractéristique de l'invention ladite mémoire d'état d'interconnexion est conçue afin que son contenu soit préservé en cas de coupure d'alimentation électrique.

Selomnencore une autre caractéristique de l'invention, les directives émises par un processeur sont provoquées par des ordres reçus sous forme de signaux numériques sur une entrée d'ordre.

Selon encore une autre caractéristique de l'invention, lesdits ordres provoquant les directives peuvent être des requêtes de transfert et des notifications de fin de transfert.

L'invention va être décrite en détail sur un exemple de réalisation et en se référant aux dessins annexés dans lesquels :

– la figure 1 représente un appareil électronique composé de modules enfichables à l'aide de connecteurs,

– la figure 2 montre le câblage établi sur les embases de connecteurs,

– la figure 3 est un schéma synoptique d'un module.

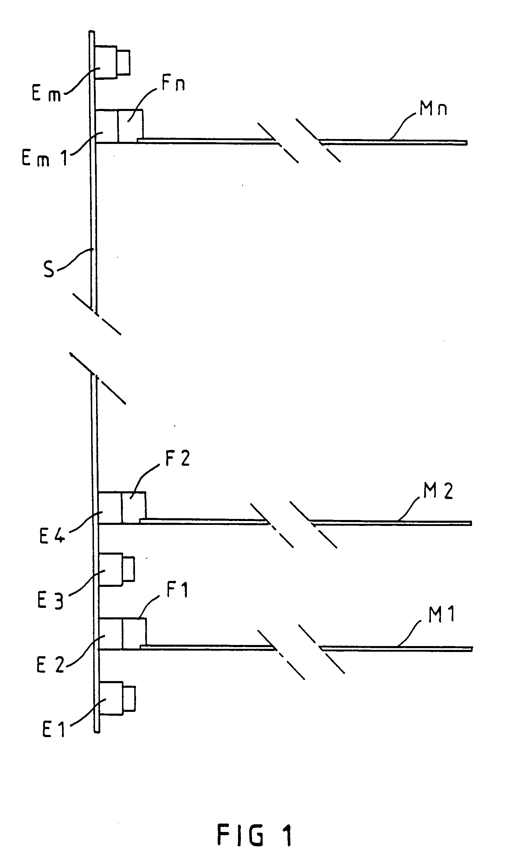

Sur la figure 1 sont représentés, vus de profil, des modules M1, M2, ... Mn d'un appareil électronique, qui sont par exemple des cartes munies, chacune, d'une fiche de connecteur : F1, F2, ... Fn. Ces fiches sont identiques, notamment sans dispositif détrompeurs, de sorte que chaque module est susceptible de s'enficher dans l'une quelconque des embases de connecteur E1, E2, ... Em, fixées sur un support commun S. On a illustré cette banalisation des emplacements en représentant sur la figure le module M1 enfiché dans l'embase E2, le module M2 dans l'embase E4, le module Mn dans l'embase Em-1.

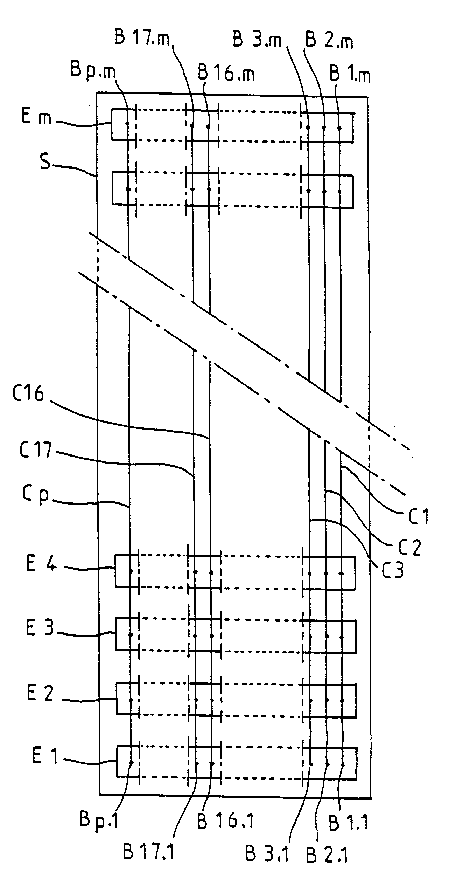

La figure 2 montre, vu de dessus, le câblage entre les embases des connecteurs. Pour repérer un contact sur l'embase ou sur la fiche d'un connecteur on a utilisé la lettre B suivie d'un numéro indiquant sa position sur le connecteur. Comme le montre la figure, les contacts "homologues", c'est-à-dire ayant la même position relative sur leur connecteur, autrement dit portant le même indice, sont reliés entre eux par un conducteur dit "conducteur de ligne" : C1, C2, ... Cp par, respectivement, les contacts B1, B2, ... Bp de chaque connecteur. On notera que, de cette façon, un module est apte à fonctionner à toute place puisque son branchement électrique demeure le même quelle que soit l'embase utilisée pour l'enficher.

La mise en oeuvre du procédé proprement dit utilise, par exemple, 16 conducteurs de ligne : C1, C2, ... C16 qui constituent ce qui sera appelé la double ligne de transfert. Les autres conducteurs C17 à Cp restent disponibles pour tout autre usage que le transfert de signaux entre modules, et peuvent servir notamment à l'alimentation électrique des modules et à la distribution de signaux communs tel qu'un signal d'horloge par exemple.

La double ligne de transfert comporte, d'une part, un conducteur ou plusieurs conducteurs de liaison constituant la ligne de liaison et, d'autre part, des conducteurs de connexion constituant la ligne de connexion. Dans l'exemple, la ligne de liaison ne comporte qu'un conducteur de ligne, C1, la ligne de connexion étant constituée des 15 autres conducteurs de la double ligne de transfert (C2, C3, ... C16).

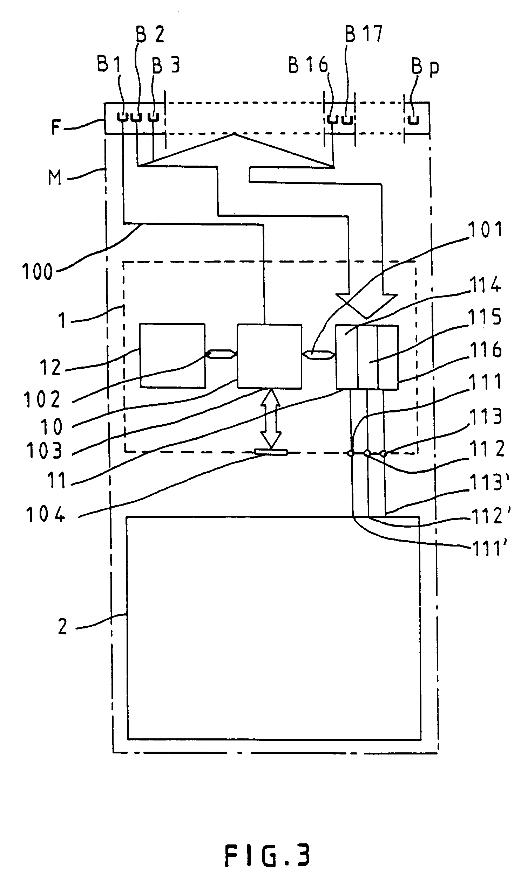

On se reportera maintenant au schéma synoptique d'un module M donné par la figure 3. Le module comporte la fiche de connecteur F qui permet comme il a été dit de l'enficher dans l'une quelconque des embases E, un dispositif de transfert 1, et naturellement, le "module proprement dit" c'est-à-dire l'ensemble des circuits et composants qui assure sa fonction propre, dont les caractéristiques et la composition ne concernent pas l'invention et qui est globalement représenté sur la figure par le contour 2.

Le dispositif de transfert 1 comporte un microprocesseur 10, une matrice de connexion 11 et une mémoire d'état d'interconnexion 12.

Pour tous les modules, le connecteur F et le dispositif de transfert 1 sont, sinon identiques, du moins semblables, seules changeant d'un module à l'autre, les fonctions réalisées par les éléments réunis dans le contour 2.

Le microprocesseur 10 présente une entrée-sortie de type série 100 qui est reliée au contact B1 de la fiche F et se trouve ainsi connectée au conducteur de liaison C1 quand le module est enfiché dans une embase. Il présente par ailleurs une voie de sortie de type parallèle 101 qui transmet des signaux de commande numérique à la matrice de connexiom 11 et il est couplé à la mémoire 12 par une liaison bilatérale multiplexée 102 lui permettant de façon habituelle d'écrire dans cette mémoire ou de la relire. Il peut présenter, en outre, une entrée de signaux d'ordre 103, de préférence de type parallèle, reliée à une fiche 104 accessible de l'extérieur de l'appareil.

La matrice de connexion 11 est, d'une part, reliée aux 15 contacts B2, ... B16 de la fiche et se trouve ainsi connectée aux 15 conducteurs de connexion quand le module est enfiché dans une embase. Elle présente, d'autre part, un certain nombre de points de connexion, trois à titre d'exemple sur la figure : 111, 112, 113, qui sont reliés au module proprement dit 2 ;

comme représenté en 111', 112' et 113' (figure 3).

Notons que le "module proprement dit 2" pourrait en fait être composé de plusieurs appareils distincts, chacun relié par un câble individuel.

Pour chacun de ces points de connexion la matrice comporte un circuit sélecteur (114, 115, 116 pour, respectivement les points 111, 112, 113) équipé d'un jeu de 15 commutateurs électroniques, chaque commutateur permettant de connecter au point de connexion l'un des contacts B2, ... B16 de la fiche. Ces commutateurs sont commandés à partir des signaux de commande fournis par le microprocesseur sur sa sortie 101 de façon qu'ils soient tous ouverts et alors le point de connexion est libre, ou qu'il y en ait un, et un seul, fermé et alors un des conducteurs de connexion se trouve sélectivement relié au point de connexion.

Selon l'utilisation qui en est faite dans le module proprement dit, un point de connexion est émetteur s'il se trouve alimenté par une source de signal du module ou, au contraire, récepteur quand il est destiné à transmettre au module un signal reçu via le circuit sélecteur. On comprend que l'ensemble des dispositifs de transfert de l'appareil permet d'assurer le transfert des signaux entre modules puisque, pour qu'un signal émis d'un point de connexion émetteur soit transféré à un point de connexion récepteur ou à plusieurs de ces points, il suffit que tous ces points aient été connectés, grâce aux signaux de commande des microprocesseurs et via leur circuit sélecteur, au même conducteur de connexion.

Il peut arriver qu'une connexion ainsi établie devienne ensuite inutile parce que le transfert auquel elle servait est terminé. Il est alors possible, afin qu'il puisse être attribué à un autre transfert, de libérer le conducteur de connexion qui y avait été affecté en déconnectant les points de connexion. Le nombre de conducteurs d'interconnexion, égal à 15 dans l'exemple, peut ainsi être limité au nombre maximal d'interconnexions à établir simultanémemt, sans pouvoir être différées.

Il est nécessaire de coordonner les commandes des microprocesseurs sur les circuits sélecteurs pour qu'une connexion s'établisse correctement entre des points de connexion via un conducteur de connexion déterminé ou pour que la libération d'um conducteur de connexion s'effectue. A cette fin les microprocesseurs échangent entre eux via la ligne de liaison des messages codés numériquement. De préférence, ces messages sont' transmis en mode série pour qu'il n'y ait besoin que d'un conducteur de liaison (C1).

Le processus proposé pour la coordination des commandes est que toute modification de la configuration d'interconnexion soit provoquée par un message dont le contenu codé signifie une directive de reconfiguration d'interconnexion, émis par un microprocesseur et diffusé à l'ensemble des microprocesseurs 10.

Pour désigner, dans ces directives, les conducteurs et les points de connexion, il est attribué à chacun un code d'identification : par exemple les conducteurs de connexion sont simplement numérotés comme les contacts de connecteur qu'ils relient ; de préférence le code d'identification des points de connexion permet de reconnaître la fonction et les caractéristiques de leur module, la fonction particulière du point dans le module, et il est complété d'un indice s'il y a lieu de distinguer entre plusieurs modules de mêmes caractéristiques du même ensemble.

Une directive de reconfiguration d'interconnexion indique d'une façon générale des points de connexion devant être connectés à un conducteur de connexion ou déconnectés d'un tel conducteur.

On peut utiliser par exemple des directives de connexion ou de déconnexion, et des directives de libération de conducteurs.

En principe, une directive de connexion ou de déconnexion spécifie un conducteur de connexion et des points de connexion devant s'y connecter ou s'en déconnecter, mais on peut bien sûr envisager des directives multiples permettant de spécifier en un seul message des connexions ou déconnexions portant sur plusieurs conducteurs de connexion, notamment pour établir des liaisons bifilaires.

Toutefois une directive de connexion peut ne pas comporter la spécification explicite d'un conducteur de connexion, celui-ci pouvant être alors déterminé par chaque microprocesseur parmi les conducteurs libres par un critère de choix précis, par exemple celui ayant le plus petit code d'identification.

Une directive de libération de conducteur spécifie un conducteur de connexion que doit libérer tout point de connexion y étant connecté.

Les directives de reconfiguration sont analysées par chaque microprocesseur et tout microprocesseur qui reconnait par cette analyse la consigne de devoir connecter ou déconnecter un point de connexion de son module, transmet au circuit sélecteur de ce point le signal de commande approprié pour que s'exécute la consigne.

L'émission d'une directive de reconfiguration par un microprocesseur est en principe provoquée par un ordre qu'il reçoit sous forme de signaux numériques sur son entrée de signaux d'ordre (103 sur la figure 3). Un tel ordre peut être par exemple une requête de transfert, une notification de fin de transfert, une demande de raccordement, une demande de déconnexion.

Une requête de transfert, si elle est simple, spécifie un point de connexion émetteur et un point de connexion récepteur au moins, entre lesquels il y a besoin de transférer un signal. Le microprocesseur recevant la requête élabore une directive de connexion appropriée, si nécessaire en choisissant pour assurer le transfert un conducteur de connexion parmi ceux qui sont libres (celui par exemple ayant le plus petit code d'identification).

Bien entendu, si plusieurs requêtes produites par des microprocesseurs différents sont émises simultanément, on peut prévoir une hiérarchisation de ces requêtes, et les satisfaire dams l'ordre de cette hiérarchie, en faisant appel à un procédé d'arbitrage connu en soi.

Une notification de fin de transfert spécifie un des points de connexion impliqué dans le transfert en question. Le microprocesseur la recevant détermine le conducteur de connexion attribué au transfert et élabore la directive de libération de conducteur de connexion appropriée.

Bien entendu, on peut programmer les microprocesseurs pour qu'ils admettent des requêtes ou des notifications multiples, se rapportant à plusieurs conducteurs de connexion.

Une demande de raccordement se rapporte à une interconnexion de transfert déjà établie par une requête de transfert ultérieur, indirectement désignée en transmettant le code d'identification d'un des points de connexion impliqués, et elle spécifie au moins un point de connexion devant s'y connecter. Le microprocesseur la recevant détermine le conducteur de connexion et élabore la directive de connexion appropriée pour y raccorder le point ou les points de connexion spécifiés.

Une demande de déconnexion se rapporte à un conducteur de connexion ayant été affecté à un transfert, indirectement désigné par un point de connexion qui y est connecté. Le microprocesseur la recevant détermine le conducteur de connexion et élabore la directive de déconnexion correspondante.

Pour être en mesure d'élaborer les directives de reconfiguration correspondant aux ordres reçus, notamment pour choisir un conducteur de connexion libre pour une requête de transfert ou pour déterminer le conducteur de connexion indirectement désigné par un point de connexion y étant connecté, une solution proposée est que tout microprocesseur susceptible de recevoir des ordres utilise une mémoire d'état d'interconnexion (12 sur la figure 3) qu'il met à jour à chaque directive transmise sur la ligne de liaison. Cette mémoire permet de connaître l'état de chaque conducteur de connexion, c'est-à-dire si le conducteur est libre ou quels sont les points de connexion qui y sont branchés au moyen par exemple d'un registre pour chaque conducteur.

Il peut être utile que l'état d'interconnexion de l'appareil, c'est-à-dire toutes les connexions des points de connexion, puisse se rétablir automatiquement sans qu'il y ait à transmettre de nouveaux ordres, au retour des alimentations électriques des modules si ces alimentations ont été interrompues (volontairement ou accidentellement). On peut y parvenir eu équipant chaque dispositif de transfert d'une mémoire d'état d'interconnexion conçue pour que son contenu soit automatiquement préservé en cas d'arrêt d'alimentation, par exemple en utilisant une mémoire à sauvegarde par pile. Au rétablissement de l'alimentation, chaque microprocesseur analyse alors le contenu de cette mémoire et rétablit par des signaux de commande appropriés l'état des circuits sélecteurs de son module.

Sur la figure 3 il est montré que les signaux d'ordres reçus par le microprocesseur sur son entrée de signaux d'ordres (103) peuvent provenir d'une source de signaux externes au module, mais ils peuvent aussi, dans certaines applications, être élaborés par le module proprement dit, par exemple au moyen de commandes manuelles placées sur le module.

Par ailleurs, les microprocesseurs peuvent répondre aux ordres reçus, soit par un message d'acquittement, soit par un message de rejet approprié si l'ordre n'a pu être exécuté (par exemple faute de conducteur de connexion libre). Au lieu d'une simple entrée, la voie 104 sera alors une entrée/sortie.

Bien entendu, le microprocesseur représenté par l'élément 10 de la figure 3 n'est pas nécessairement un unique composant mais il peut être réalisé, entre autres moyens, de plusieurs circuits intégrés, par exemple un microprocesseur proprement dit couplé à des contrôleurs d'entrée/sortie. Inversement, la mémoire 12 peut se trouver intégrée au microprocesseur.

On pourra utiliser notamment un microprocesseur de type 8051 commercialisé par la Société INTEL.

On notera que l'exemple décrit se rapporte à des transferts de signaux devant être assurés entre des modules d'un appareil mais que l'invention peut aussi bien s'appliquer pour assurer le transfert de signaux entre des appareils constituant les différents modules d'un ensemble électronique. Dans ce cas, au lieu d'un câblage reliant directement les contacts d'embase des connecteurs, la double ligne de transfert peut avantageusement être réalisée sous forme d'un câble multiconducteur plat sur lequel les fiches à contacts multiples connectant les modules viennent se brancher au moyen, par exemple, d'aiguilles traversant l'isolant et venant au contact des conducteurs.

D'une façon générale, le dispositif selon l'invention s'applique particulièrement à tout appareillage électronique composé de modules entre lesquels doivent s'opérer des transferts de signaux et, en particulier, des signaux audio ou vidéo.

## Revendications

1. Procédé pour le transfert de signaux, notamment analogiques, entre des points de connexion (111, 112, 113) répartis entre des modules (M1, ... Mn) d'un ensemble électronique, chaque signal devant être transmis de façon au moins quasi-continue entre un point de connexion émetteur et au moins un point de connexion récepteur, chaque module ayant au moins un point de connexion émetteur ou récepteur, l'ensemble électronique comportant une double ligne de transfert permanente commune à l'ensemble des modules, formée par un groupe de conducteurs physiques (C1, C2, ... C16) et comportant, d'une part, une ligne de liaison comportant au moins un conducteur de liaison (C1) auquel tous les modules (M1, M2, ... Mn) sont reliés en permanence et utilisée pour la diffusion de messages numériques entre modules et, d'autre part, une ligne de connexion comportant plusieurs conducteurs de connexion (C2, ... C16), un code d'identification numérique étant attribué à chaque point de connexion ; ledit procédé étant caractérisé par le fait que chaque conducteur de connexion est susceptible d'être relié sélectivement à chaque point de connexion, un code d'identification numérique étant attribué à chaque conducteur de connexion, ledit procédé consistant :

   – à faire directement diffuser par au moins un processeur d'un des modules, à l'ensemble des modules et au moyen de la 'ligne de liaison (C1) des directives de reconfiguration d'interconnexion, indiquant, au moyen desdits codes d'identification numériques, au moins un conducteur de connexion (C2, ... C16) et un ou des points de connexion devant y être connectés ou déconnectés ;

   – en ce que tout processeur de module réagit à toute consigne de connexion ou de déconnexion détectée dans une directive et qui se rapporte à un des points de connexion de son module pour établir ces connexions ou déconnexions, et

   – à réaliser ensuite via le ou les conducteurs indiqués le transfert de signaux entre les points de connexion reliés par la nouvelle reconfiguration d'interconnexion ainsi établie.

2. Procédé selon la revendication 1, caractérisé en ce qu'un conducteur de connexion est désigné indirectement par un point de connexion qui lui est relié.

3. Procédé selon la revendication 1 ou 2, caractérisé en ce que des modules enregistrent en mémoire l'état de chaque conducteur de connexion.

4. Procédé selon la revendication 3, caractérisé en ce que la mémorisation des états de connexion des différents conducteurs de connexion est mise à jour à chaque directive transmise sur la ligne de liaison.

5. Procédé selon l'une quelconque des revendications précédentes, caractérisé en ce que des directives de reconfiguration sont des directives de libération indiquant un conducteur de connexion dont tout point de connexion y étant connecté doit s'en déconnecter.

6. Appareillage électronique pour le transfert simultané de signaux notamment analogiques entre des points de connexion (111, 112, 113) répartis entre des modules (M1, ... Mn) d'un ensemble électronique, chaque signal devant être transmis de façon au moins quasi-continue entre un point de connexion émetteur et au moins un point de connexion récepteur, chaque module ayant au moins un point de connexion caractérisé en ce que :

des contacts homologues des embases des prises à contacts multiples connectant les modules sont reliés entre eux par des conducteurs de ligne (C1, C2, ... C16) dont au moins un (Cl), dit conducteur de liaison, constitue une ligne de liaison et au moins deux des autres (C2, ... C16), dits conducteurs de connexion, constituent une ligne de connexion,

chaque module comporte, en plus de la fiche (F) de la prise à contacts multiples et du module proprement dit (2), un dispositif de transfert (1) comportant un processeur (10) relié à chaque contact de la fiche (B1) corespondant à un conducteur de liaison et une matrice de connexion (11) à laquelle le processeur transmet des signaux de commande,

la matrice est reliée d'une part aux contacts de la fiche correspondant aux conducteurs de connexion (B2, ... B16) et d'autre part aux points de connexion (111, 112, 113) reliés au module proprement dit,

pour chaque point de connexion, la matrice de connexion comporte un circuit sélecteur (114, 115, 116) commandé à partir des signaux de commande transmis par le processeur, qui permet de relier le point de connexion à l'un quelconque des conducteurs de connexion via le contact correspondant de la fiche du module,

au moins un des processeurs émet sur la ligne de liaison des messages numériques diffusant à l'ensemble des processeurs des directives de reconfiguration d'interconnexion, au moyen de codes d'identification numérique attribués à chaque point de connexion et à chaque conducteur de connexion, directives reçues et analysées par chaque processeur, et tout processeur qui détecte, par l'analyse d'une directive, une consigne de connexion ou de déconnexion relative à un point de connexion de la matrice de connexion de son module, transmet à cette matrice le signal de commande approprié pour établir ces connexions ou déconnexions.

7. Appareillage électronique selon la revendication 6, caractérisé en ce que les circuits sélecteurs des matrices de connexion sont équipés d'un jeu de commutateurs électroniques comportant pour chaque conducteur de connexion un commutateur permettant de connecter sélectivement le conducteur au point de connexion.

8. Appareillage électronique selon l'une quelconque des revendications 6 ou 7, caractérisé en ce que le dispositif de transfert des modules comporte une mémoire d'état d'interconnexion (12) dans laquelle le processeur du module peut écrire et qu'il peut relire et en ce que cette mémoire contient des registres indiquant l'état de chaque conducteur de connexion.

9. Appareillage électronique selon la revendication 8, caractérisé en ce que ladite mémoire d'état d'interconnexion est conçue afin que son contenu soit préservé en cas de coupure d'alimentation électrique.

10. Appareillage électronique selon l'une quelconque des revendications 6 à 9, caractérisé en ce que les directives émises par un processeur sont provoquées par des ordres reçus sous forme de signaux numériques sur une entrée d'ordre (104).

11. Appareillage électronique selon la revendication 10, caractérisé en ce que les ordres provoquant les directives sont des requêtes de transfert et des notifications de fin de transfert.

12. Appareillage électronique selon les revendications 10 ou 11, caractérisé en ce que les ordres provoquant les directives sont des ordres de raccordement et/ou des demandes de déconnexion.

**Patentansprüche**

1. Verfahren zur Übertragung von Signalen, insbesondere analogen Signalen, zwischen Anschlußpunkten (111, 112, 113), die zwischen Modulen (M1, ... Mn) einer elektronischen Anordnung verteilt sind, wobei jedes Signal auf wenigstens quasi-kontinuierliche Weise zwischen einem sendenden Anschlußpunkt und wenigstens einem empfangenden Anschlußpunkt übertragen werden soll, jedes Modul mindestens einen sendenden oder empfangenden Anschlußpunkt besitzt, die elektronische Anordnung eine permanente, allen Modulen gemeinsame doppelte Übertragungsleitung besitzt, die von einer Gruppe von körperlichen Leitern (C1, C2, ... C16) gebildet ist und einerseits eine Verbindungsleitung, die mindestens einen Verbindungsleiter (C1) besitzt, mit dem alle Module (M1, M2, ... Mn) permanent verbunden sind, und zur Übertragung von digitalen Informationen zwischen Modulen verwendet werden, und andererseits eine Verbindungsleitung aufweist, die mehrere Anschlußleiter (C2, ... C16) besitzt, und ein digitaler Identifizierungskode jedem Anschlußpunkt zugeteilt ist, dadurch gekennzeichnet, daß jeder Anschlußleiter selektiv mit jedem Anschlußpunkt verbindbar ist, wobei ein digitaler Identifizierungskode jedem Verbindungsleiter zugeordnet ist, wobei dieses Verfahren darin besteht:

– daß man direkt von wenigstens einem Prozessor eines der Module allen Modulen und mit Hilfe der Verbindungsleitung (C1) Verbindungsrekonfigurations-Anweisungen senden läßt, die mit Hilfe der digitalen Identifizierungskodes mindestens einen Anschlußleiter (C2, ... C16) und einen Anschlußpunkt oder Anschlußpunkte angeben, die an diesen angeschlossen oder von diesem getrennt werden sollen,

– daß jeder Modulprozessor auf jede Verbindungs- oder Trennungsanordnung reagiert, die in einem Befehl festgestellt wird und die sich auf einen der Anschlußpunkte seines Moduls bezieht, um diese Verbindungen oder Trennungen herzustellen, und

– daß anschließend über den oder die angegebenen Leiter die Übertragung von Signalen zwischen den Anschlußpunkten ausgeführt wird, die durch die auf diese Weise hergestellte neue Verbindungsrekonfiguration verbunden sind.

2. Verfahren nach Anspruch 1, dadurch gekennzeichnet, daß ein Anschlußleiter indirekt durch einen Anschlußpunkt bezeichnet ist, der mit ihm verbunden ist.

3. Verfahren nach Anspruch 1 oder 2, dadurch gekennzeichnet, daß Module den Zustand jedes Anschlußleiters speichern.

4. Verfahren nach Anspruch 3, dadurch gekennzeichnet, daß die Speicherung der Verbindungszustände der einzelnen Anschlußleiter bei jeder auf der Verbindungsleitung übertragenen Anweisung auf den neuen Stand gebracht wird.

5. Verfahren nach einem der vorhergehenden Ansprüche, dadurch gekennzeichnet, daß Rekonfigurationsanweisungen Freigabeanweisungen sind, die einen Anschlußleiter bezeichnen, von dem jeder an ihn angeschlossene Anschlußpunkt von ihm getrennt werden muß.

6. Elektronische Vorrichtung zur gleichzeitigen Übertragung von Signalen, insbesondere analogen Signalen, zwischen Anschlußpunkten (111, 112, 113), die zwischen Modulen (M1, ... Mn) einer elektronischen Anordnung verteilt sind, wobei jedes Signal auf wenigstens quasikontinuierliche Weise zwischen einem sendenden Anschlußpunkt und wenigstens einem empfangenden Anschlußpunkt übertragen werden soll und jedes Modul wenigstens einen Anschlußpunkt besitzt, dadurch gekennzeichnet, daß einander entsprechende Kontakte der Sockel der Mehrkontaktanschlüsse zum Anschluß der Module untereinander durch Leitungsleiter (C1, C2, ... C16) verbunden sind, von denen wenigstens einer (C1), Verbindungsleiter genannt, eine Verbindungsleitung und wenigstens zwei der anderen (C2, ... C16), Anschlußleiter genannt, eine Anschlußleitung bilden, daß jedes Modul abgesehen von dem Stecker (F) des Mehrkontaktanschlusses und dem eigentlichen Modul (2) eine Übertragungsvorrichtung (1) mit einem Prozessor (10), der mit jedem Kontakt des Steckers (B1) verbunden ist, der einem Verbindungsleiter entspricht, und eine Anschlußmatrix (11) besitzt, auf die der Prozessor Steuerbefehle überträgt,

daß die Matrix einerseits mit den den Anschlußleitern (B2, ... B16) entsprechenden Kontakten des Steckers und andererseits mit den mit dem eigentlichen Modul verbundenen Anschlußpunkten (111, 112, 113) verbunden ist,

daß die Anschlußmatrix für jeden Anschlußpunkt eine Wählschaltung (114, 115, 116) besitzt, die ausgehend von den von dem Prozessor übertragenen Steuersignalen gesteuert ist und die Verbindung des Anschlußpunktes eines beliebigen Anschlußleiters über den entsprechenden Kontakt des Steckers des Moduls gestattet,

daß wenigstens einer der Prozessoren auf der Verbindungsleitung digitale Informationen sendet, die auf alle Prozessoren Verbindungsrekonfigurationsanweisungen mit Hilfe von digitalen Identifizierungskodes überträgt, die jedem Anschlußpunkt und jedem Anschlußleiter zugeteilt sind, wobei diese Anweisungen von jedem Prozessor empfangen und analysiert werden, und daß jeder Prozessor, der durch die Analyse einer Anweisung eine Verbindungs- oder Trennungsanordnung feststellt, die sich auf einen Anschlußpunkt der Anschlußmatrix seines Moduls bezieht, auf diese Matrix das zur Herstellung dieser Verbindungen oder Trennungen geeignete Steuersignal überträgt.

7. Elektronische Vorrichtung nach Anspruch 6, dadurch gekennzeichnet, daß die Wählschaltungen der Anschlußmatrizes mit einem Satz von elektronischen Umschaltern ausgerüstet sind, der für jeden Anschlußleiter einen Umschalter besitzt, der den selektiven Anschluß des Leiters an den Anschlußpunkt gestattet.

8. Elektronische Vorrichtung nach einem der Ansprüche 6 oder 7, dadurch gekennzeichnet, daß die Übertragungsvorrichtung der Module einen Verbindungszustandsspeicher (12) besitzt, in dem der Prozessor des Moduls schreiben kann und den er wieder lesen kann, und daß dieser Speicher Register enthält, die den Zustand jedes Anschlußleiters angeben.

9. Elektronische Vorrichtung nach Anspruch 8, dadurch gekennzeichnet, daß der Verbindungszustandsspeicher so ausgebildet ist, daß sein Inhalt im Fall der Unterbrechung der elektrischen Speisung bewahrt bleibt.

10. Elektronische Vorrichtung nach einem der Ansprüche 6 bis 9, dadurch gekennzeichnet, daß die von einem Prozessor gesendeten Anweisungen durch Befehle ausgelöst sind, die in Form von digitalen Signalen an einem Befehlseingang (104) empfangen werden.

11. Elektronische Vorrichtung nach Anspruch 10, dadurch gekennzeichnet, daß die die Anweisungen auslösenden Befehle Übertragungsbefehle und Übertragungsendmeldungen sind.

12. Elektronische Vorrichtung nach den Ansprüchen 10 oder 11, dadurch gekennzeichnet, daß die die Anweisungen auslösenden Befehle Anschlußbefehle und/oder Trennungsbefehle sind.

## Claims

1. A method for transferring signals, particularly analog signals, between ports (111, 112, 113) distributed between modules (M1, ... Mn) of an electronic assembly, each signal having to be transmitted at least quasi-continuously between a transmitting port and at least one receiving port, each module having at least a transmitting or receiving port, the electronic assembly including a permanent double transfer line common to the assembly of the modules, formed by a group of physical conductors (C1, C2, ... C16) and comprising, on the one hand, a connection line including at least one connecting conductor (C1) to which all the modules (M1, M2, ... Mn) are permanently connected, and used for the dissemination of digital messages between modules and, on the other hand, a connection line including several connecting conductors (C2, ... C16), a digital identification code being attributed to each connecting conductor, said method being characterized in that each connecting conductor is connectable selectively to each of the ports, a digital identification code being attributed to each connecting conductor, said method consisting :

– in causing interconnection reconfiguration commands to be disseminated directly by at least one processor or one of the modules to the whole of the modules and by means of the connection line (C1), indicating, by means of said digital identification codes, at least one connecting conductor (C2-C16) and one or more ports to be connected thereto or disconnected therefrom,

– in having every module processor complying with any connection or disconnection order detected in a command and which relates to one of the ports of its module to establish said connections or disconnections,

– in having then, via the indicated conductor(s), the tranfer of signals taking place between the ports connected by the new interconnection reconfiguration thus formed.

2. The method as claimed in claim 1, characterized in that a connection conductor is designated indirectly by a port which is connected thereto.

3. The method as claimed in claim 1 or 2, characterized in that modules store the state of each connecting conductor.

4. The method as claimed in claim 3, characterized in that the storage of the connection states of the different connection conductors is updated at each command transmitted over the linking line.

5. The method as claimed in any one of the preceding claims, characterized in that reconfiguration commands are release commands indicating a connecting conductor from which any port connected thereto must be disconnected.

6. An electronic apparatus for the simultaneous transfer of signals, particularly analog signals, between ports (111, 112, 113) distributed between modules (M1, ... Mn), of an electronic unit, each signal having to be transferred at least quasi-continuously between a transmitting port and at least one receiving port, each module having at least one port, characterized in that :

– corresponding contacts of the bases of the multiple contact connectors connecting the modules are connected together by line conductors (C1, C2, ... C16) at least one (C1) of which, called linking conductor, forms a linking line and at least two (C2, ... C16) among the others called connection conductors form a connection line,

– each module includes, in addition to the plug (F) of the multiple contact connector and the module (2) properly speaking, a transfer device (1) comprising a processor (10) connected to each contact of the plug (B1) conductor and a connection matrix (11) to which the processor transmits control signals,

– the matrix is connected, on the one hand, to the contacts of the plug corresponding to the connection conductors (B2, ... B16) and, on the other hand, to the ports (111, 112, 113) connected to the module properly speaking,

– for each port, the connection matrix includes a selector circuit (114, 115, 116) controlled from control signals transmitted by the processor, which allows the port to be connected to one of the connection conductors via the corresponding contact of the plug of the module,

– at least one of the processors transmits over the linking line digital messages disseminating to all the processors interconnection reconfiguration commands, by means of digital identification codes attributed to each port and to each connecting conductor, which commands are received and analyzed by each processor and any processor which detects, by analyzing a command, a connection or disconnection order relative to a port of the connection matrix of its module, transmits to this matrix the appropriate control signal so as to establish said connections or disconnections.

7. The electronic apparatus as claimed in claim 6, characterized in that the selector circuits of the connection matrices are equipped with a set of electronic switches comprising for each connection conductor a switch for selectively connecting the conductor to the port.

8. The electronic apparatus as claimed in any one of claims 6 or 7, characterized in that the transfer device of the modules includes an interconnection state memory (12) into which the processor of the module may write and which it may re-read and this memory contains registers indicating the state of each connection conductor.

9. The electronic apparatus as claimed in claim 8, characterized in that said interconnection state memory is designed so that its contents are preserved in the case of an electric power supply cut.

10. The electronic apparatus as claimed in any one of claims 6 to 9, characterized in that the commands emitted by a processor are caused by orders received in the form of digital signals at an order input (104).

11. The electronic apparatus as claimed in claim 10, characterized in that the orders causing the commands may be transfer requests and end of transfer notifications.

12. The electronic apparatus as claimed in claim 10 or 11, characterized in that the orders causing the commands are connection orders and/or disconnection requests.

FIG 1

FIG.3